# EUROPEAN PATENT SPECIFICATION

(11) **EP 0 315 361 B1**
(45) Date of publication and mention of the grant of the patent: **26.01.1994**
(21) Application number: 88310067.9
(22) Date of filing: 26.10.1988
(51) Int. Cl.: G11B 5/127

(54) **Magnetic head for perpendicular magnetic recording system and process**
Magnetkopf für senkrechtes Magnetaufzeichnungssystem und Herstellungsverfahren
Tête magnétique pour système d'enregistrement magnétique perpendiculaire et procédé de fabrication

(30) Priority: 30.10.1987 US 115423
(43) Date of publication of application: 10.05.1989
(73) Proprietor: SEAGATE TECHNOLOGY, INC., Scotts Valley, California 95066-4544 (US)
(72) Inventor: Endo, Kazuo, Santa Cruz California 95062 (US)
(74) Representative: Bayliss, Geoffrey Cyril

(56) References cited:
- EP-A- 0 232 505
- JP-A-62 117 113
- JP-A-62 192 015
- JP-A-62 222 410
- PATENT ABSTRACTS OF JAPAN vol. 10, no. 72 (P-438)(2129) 22 March 1986, & JP-A-60 209906 (NIPPON DENKI K.K.) 22 October 1985,
- PATENT ABSTRACTS OF JAPAN vol. 11, no. 252 (P-605)(2699) 15 August 1987, & JP-A-62 57110 (MATSUSHITA ELECTRIC INDUSTRIAL CO.) 12 March 1987,
- IEEE Transactions on Magnetics, MAG 23, September 1987, no. 5, pages 2407-2409

## Description

This invention relates to magnetic heads for perpendicular magnetic recording systems.

This invention relates generally to a magnetic head for a perpendicular recording system, and more particularly, to a thin film magnetic head which is especially adapted for recording on double-sided/double-layer disc or media, and a process for forming that head.

In conventional magnetic recording media, data is recorded by magnetizing the magnetic layer of the media in a longitudinal direction parallel to the direction of relative movement between the magnetic medium and the transducer, or head, positioned adjacent to the medium. In perpendicular recording, data is recorded by magnetizing the magnetic recording layer in the direction perpendicular to the surface of the medium.

Magnetic recording transducers generally fall into two classes; ring-type heads such as that disclosed in JP-A-60/20906 that employ magnetic material generally in the shape of a ring for defining a magnetic path, the ring having a gap therein for defining the location of the data recorded, and single pole piece heads that employ an elongated strip of high saturation flux density material to link the magnetic flux being sensed by the head with an operatively associated coil. In ring-type heads, as noted above, the resolution of the head is a function of the length of the gap, whereas in single pole piece heads, the resolution is a function of the thickness of the pole piece at its tip. Ring-type heads have long been used in longitudinal recording and have also been proposed for use in perpendicular recording. However, since a major advantage of perpendicular recording is the ability to read and write data at high density, the use of ring-type heads in perpendicular recording has not been considered advantageous because the pulse widths obtained with ring-type heads tend to lead to peak shift problems at high density. Further, ring-type heads often provide asymmetric pulse shapes and in general give rise to difficulties in reading and writing at ultra high densities. Ring-type heads as now known cannot be used with all perpendicular recording media.

IEEE Transactions on Magnetics, Mag. 23, September 1987, No. 5, pages 2407-2409, disclose a typical single pole piece head in which an elongate magnetic member slants towards a pole tip. Single pole piece heads offer the advantage of high resolution if the pole piece is made by thin film deposition techniques. With thin film deposition, pole pieces of less than one micron thickness can be obtained, which would enable the head to read informtion stored at very high densities. However, there has not yet been developed commercially acceptable methods of making and using a high volume thin film single pole piece head for perpendicular recording.

Therefore, it is an objective of this invention to provide an improved magnetic head suitable for use in perpendicular magnetic recording.

This invention provides a read/write head for use in recording and reading data on perpendicular recording media, comprising a first elongate magnetic member and a second U-shaped member having a base and two legs, said base extending parallel to said elongate member and said legs being supported by and integral with said base and extending towards a first face of said elongate member, one of said legs being longer than the other, and said first and second members being secured together with an open gap portion defined between the shorter leg of said second U-shaped member and said first elongate magnetic member, said gap portion being adapted to be proximate to said recording medium during use of read/write head, said first elongate member comprising a magnetic member having an elongate thin film layer of high permeability magnetic material carried on and extending longitudinally along said first face of said first member and terminating substantially flush with said first member proximate said recording medium in a pole tip whose end has a width and thickness operable to establish the resolution of the head when said head is used for accessing information; characterised in that said first elongate magnetic member terminates in a region having a narrow end slanted in part towards said pole tip, whereby, when driven by a write current, said narrowed end of said first elongate magnetic member will saturate magnetically leaving said pole tip end as the only effective recording surface of said head.

The invention provides a head suitable for vertical magnetic recording that is relatively simple to fabricate on a practical and reliable basis, that can be handled and used under normal conditions without special precautions, and that can be accurately positioned over a location to be accessed on the storage media.

A further feature of the invention is a main pole which includes a thin film layer of magnetic material as the read/write pole piece, thereby providing a main pole that is relatively thin so that the horizontal extent of each recorded bit is very limited, thereby maximizing the density of the recorded data.

The vertical magnetic recording head is relatively easily incorporated into disc drives by supporting it on a slider of the type already known and developed in the disc drive art and is capable of being adapted to reliable mass production techniques so that significant volumes of the heads may be fabricated.

To facilitate the construction of the magnetic head, the U-shaped member is initially formed with a portion of the lower leg incorporating a step or a spacer deposited with thin film deposition technique which may be fastened below the region of the thin film which is to function as the pole tip end. Selection of method depends on dimensions of the gap required for particular application of the head. By lapping off the bottom portion of the elongate member, the thin film pole piece which it carries, and the lower leg of the U including the entire step portion, a pole tip having a flat bottom surface and supported by an elongate magnetic member and spaced a fixed distance from the flux collecting tip of the U-shaped member of the head is reliably formed.

The invention also provides a method for making a read/write head according to the invention for use in recording and reading data on perpendicular recording media comprising the steps of forming a substrate of magnetic material having a film bearing surface, forming in said substrate (54) a face forming an acute angle with said film bearing surface and filling in space adjacent to said face with a non-magnetic material (58), laying down a probe film of a highly magnetically permeable and high saturation density material forming a pole on said film bearing surface of said substrate of magnetic material forming a U-shaped member comprising first and second leg members and a base member, said second leg member including a step portion defining a desired finished gap length between said U-shaped member and said probe film, and an unstepped portion so that only the portion of said second leg member including said step portion is of the same length as said first leg member, fastening said legs of said second member including said step portion of said second leg to said probe film layed down on said substrate of magnetic material to define an integral magnetic member, said magnetic member defining a gap between said probe film and said unstepped portion of said second leg member, lapping said magnetic member to cut off a region of said substrate of magnetic material, said probe film, and said second leg member including said step portion, thereby forming a magnetic member having said defined gap between said probe film and said second leg member, the pole tip having a flat surface substantially flush with said lapped region of said substrate of magnetic material, and cutting said magnetic member into a plurality of magnetic heads having said defined gap between said probe film and said second leg member, wherein when said magnetic heads are used in a system to read or write data to a recording medium, said flat surface of said pole tip is parallel to said recording medium.

The following is a description of a specific embodiment of the invention, reference being made to the accompanying drawings, in which:
Figure 1 is a schematic elevational view of a magnetic head for perpendicular recording media formed in accordance with this invention;
Figure 2 shows a perspective view of the magnetic head of this invention incorporated in a slider for positioning over the magnetic media;
Figures 3A-3B illustrate steps in the process of forming the magnetic head of this invention (Fig. 3A) and steps in the prior art process of forming a magnetic head (Fig. 3B);
Figs 3C and 3D provide comparative illustrations and the probe tips used in the present invention and these used by others respectively;
Figure 4 is a flow chart of the basic steps of forming a magnetic head in accordance with this invention.

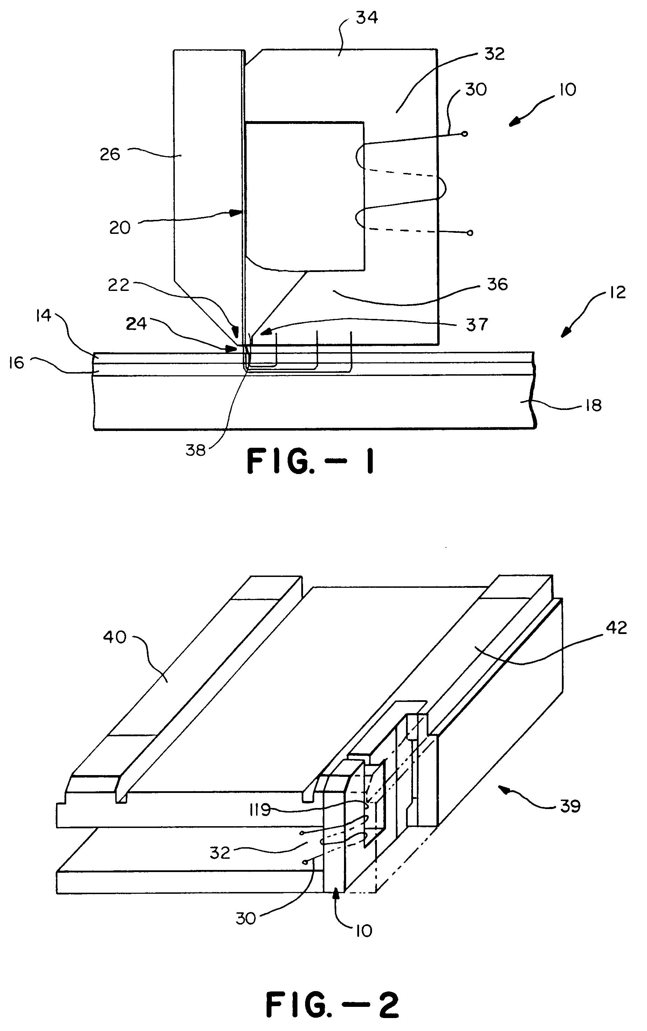

Referring to Fig. 1, it can be seen that the head 10 is positioned over the magnetic recording media 12 which consists of a hard magnetic layer 14 with vertical orientation, a soft magnetic underlayer 16, and a substrate 18 supporting the first two layers.

The head 10, shown in a vertical section of a preferred embodiment above the magnetic media 12, includes a thin film main pole 20 comprising a thin film of magnetic material, ending in a probe tip 22 positionable above the top surface of the recording media 12. The effective length and width of this pole tip piece 22 will determine the efficiency with which bits can be packed onto the recording media. Therefore, it is an objective of this invention and a critical advantage that elongate magnetic member 26 has a flat tip 24 of such dimensions that it will magnetically saturate in the tip region during the recording process so that the thin film pole is the only high permeability material in the pole/gap region. The use of this tip 24 correctly dimensioned and the correct write current provides a very high bit packing density in the longitudinal direction, the critical recording direction in a perpendicular recording system.

the thin film main pole 20 is supported on an elongate piece of magnetic material 26. This elongate piece 26 which is made of ferrite or the like is provided to complete the magnetic circuit, as well as to support the thin film main pole. The energising coil 30 may be mounted on this elongate magnetic piece 26 or on the back bar 32. The magnetic elongate piece 26, in addition to closing the magnetic circuit, serves to carry the magnetic flux down to the pole tip 22, to concentrate a large amount of flux at this pole tip and provide reliable reading and recording of data on the magnetic substrate.

The magnetic circuit is completed through a yoke comprising a first leg 34, the back bar 32, and a lower leg 36. As will become apparent in a discussion of the process used to form this magnetic head, the process disclosed herein is capable of reliably spacing the lower leg 36 across a very narrow gap 38 from the main pole tip 22. In this way, a much higher resolution data recording head is provided, without the broad pulse widths typically associated with prior efforts in this field. In use, during writing the objective is to saturate the regions 22, 37 concentrating the flux in the tip 24. The result is a probe-like effect that writes very high resolution bits on the magnetic layer. For reading, there is no saturation of the regions and the head acts like a narrow gap ring head.

The heads 10 shown in Figure 1 are adapted to be mounted in a slider 3 shown in Figure 2 for use in a Winchester disc drive. This slider 39 is of a type already well known in this technology, and details of its construction need not be disclosed in detail herein. The slider, the lower right hand portion of which is shown cut away to illustrate the mounting of the magnetic head, includes air bearing surfaces 40,42 for causing the head 10 and its recording probe tip 22 to fly just over the surface of a Winchester hard disc. The main core of the magnetic head can be preferably mounted at the trailing portion of one of the air bearing surfaces 42, as shown at the right of Figure 2, with the trailing edge or back bar 32 exposed so that the coil 30 may be mounted thereon for energizing the magnetic circuit defined by the head 10.

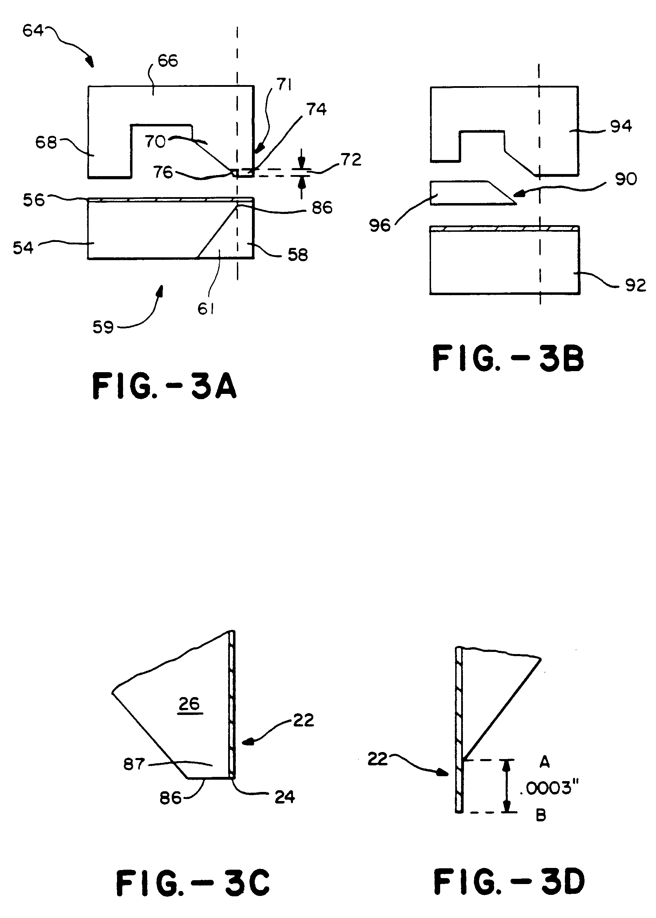

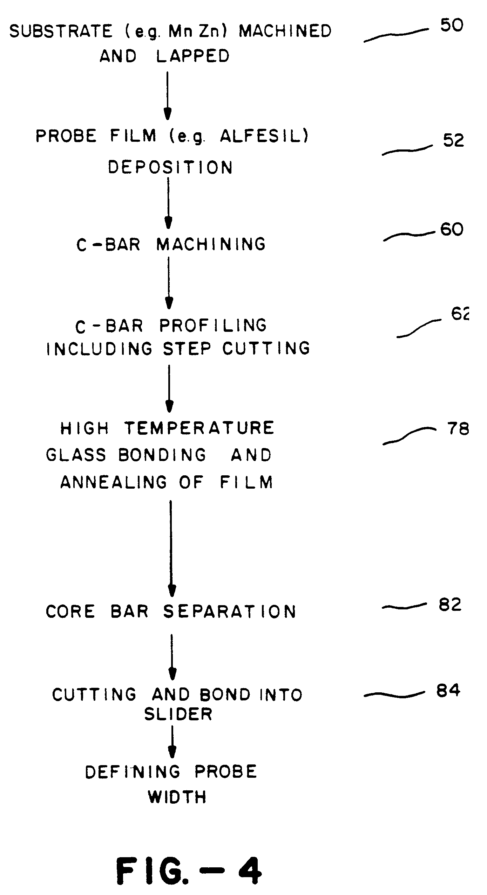

An outline of the process to make the head of the present invention is disclosed here with reference to Figure 4. The major difference between the process used to form this invention and the process to form the type of heads shown in Figures 3B and 3D used by others, appears from a comparison of Figures 3A (showing the head of this invention) and 3B (showing a head of the type manufacture in our above specification). The process begins by machining and lapping a magnetic substrate (54) (step 50) and then depositing a probe film (56), Alfesil, for example, on this magnetic substrate (step 52). This defines one of the primary head formation as purchased by others.

As can be seen looking at Figure 3A, the step 50 of machining the ferrite substrate to form the substrate 54 may include cutting off the foot region 58 of the elongate piece 54 at an acute angle with the probe film 56. This foot region 58 will then be filled in with a non-magnetic material in order to provide an elongate block 59 that is longer than the finished member needs to be. The probe film 56 is then deposited (step 52) over the full length of this elongate block.

In a sequence of steps starting with a separate piece of magnetic material, a bar of magnetic material such as MZ ferrite is machined (step 60), profiled and cut (step 62) to form the back bar 64 of the finished head (shown in Figure 3A). It will be seen that this generally U-shaped back bar 64 of magnetic material includes base member 66 which will typically be used to support the coil, and first and second legs 68, 70. One of the legs 70 has a foot 71 that will serve as the flux collector located across the gap from main pole 24. This leg 70 is formed with a step 74, this step extending out a distance equal to the desired finished gap length between back bar 64 and elongate member and probe pole 56. The base of the leg 70 also includes an unstepped portion 76 which will be filled with glass to define the finished gap.

As the next step (step 78), back bar 64 is bonded to elongate bar 54 to form a block which will eventually be cut into a plurality of heads. Glass is then flowed into the gap 76 to fix the gap length between the base of the leg 70 and the elongate ferrite bar and specifically, the probe 56 and probe tip. As annealing is temperature dependent, it is also accomplished at this time if the desired temperature is reached. The region 61 could also be filled with bonding glass at this time. After separation (step 82) of bar into cores, each core is cut and bonded (step 84) into one of a plurality of heads of the type shown in Figure 1, after which it is lapped to define a pole width in a manner, for example, as shown in US-A-4,839,761.

In the course of this cutting step, a cut is made across the line marked "Finished Surface" 86 in Figure 3A. In this way, the probe pole 56 is fabricated with a flat surface indicated at 24 in Figure 1 of very fine dimensions. This probe pole tip 24 will define the bit recording density of the finished head. The ferrite backing bar 54 for this probe pole may also include a short, flat surface 86 (Figure 3C).

To concentrate the flux of the magnetic circuit at the probe tip 24, the region 87 in actual operation will saturate magnetically, effectively defining the magnetic length of the pole tip.

The advantages of this product over the process disclosed in US-A-4,839,761 referred to above are that in fabrication of the product shown in Figure 3D, a 30° angle must be formed on the ferrite with a sharp point indicated generally at 90 in order to properly concentrate the magnetic flux at the tip of the probe film supported on a non-magnetic back bar 92 was extremely difficult to achieve. No such sharp point is formed in the claimed probe. Also, it is apparent from an inspection of Figure 3B that proper alignment of the back bar 94, ferrite bar 96 and support 92 all become critical along with the machining of the sharp point 90 on the ferrite bar 96. In the present product, because of the lapping step used to form the finished head, alignment is less critical.

Finally, in the finished design provided by the design of Figure 3D, it was expected that there would be some loss of magnetic flux between the end of the tip 90 and the end of the probe pole defined by the magnetic probe film; in the design of Figure 3C, no such loss is expected. Thus, in actual use, the write process becomes considerably more accurate.

## Claims

1. A read/write head for use in recording and reading data on perpendicular recording media (12), comprising a first elongate magnetic member (20, 26) and a second U-shaped member (32, 34, 36) having a base (32) and two legs (34, 36), said base extending parallel to said elongate member and said legs being supported by and integral with said base and extending towards a first face of said elongate member, one of said legs (34) being longer than the other (36), and said first and second members being secured together with an open gap portion (38) defined between the shorter leg (36) of said second U-shaped member and said first elongate magnetic member, said gap portion being adapted to be proximate to said recording medium during use of read/write head, said first elongate member comprising a magnetic member (26) having an elongate thin film layer (20) of high permeability magnetic material carried on and extending longitudinally along said first face of said first member and terminating substantially flush with said first member proximate said recording medium in a pole tip (22) whose end (24) has a width and thickness operable to establish the resolution of the head when said head is used for accessing information; characterised in that said first elongate magnetic member (26) terminates in a region having a narrow end slanted in part towards said pole tip (22), whereby, when driven by a write current, said narrowed end (87) of said first elongate magnetic member (20, 26) will saturate magnetically leaving said pole tip end (24) as the only effective recording surface of said head.

2. A read/write head as in Claim 1, characterised in that said pole tip end (24) comprises a flat surface parallel to the surface of said perpendicular recording media (12).

3. A read/write head as in Claim 2, characterised in that said elongate magnetic member (26) includes a bottom region facing said perpendicular recording medium, said bottom region terminating in a face inclined upwardly away from said surface of said perpendicular recording media (12).

4. A read/write head as in any of Claims 1 to 2, characterised in that said U-shaped member (32, 34, 36) comprises magnetic material, a magnetic circuit for accessing data on said media being completed through said U-shaped magnetic member, said elongate member (20, 26), said pole tip end (22) and said magnetic recording media (12).

5. A read/write head as in claim 4, characterised in that a corner of said head defined by said upwardly inclined surface is filled with a non-magnetic material (58), so that the end (22) of said elongate member (20) proximate the recording surface is mechanically protected and to avoid vacancy in air bearing surfaces when said head is used in a read/write system.

6. A method for making a read/write head according to any of claims 1 to 5 for use in recording and reading data on perpendicular recording media comprising the steps of:
forming a substrate (54) of magnetic material having a film bearing surface (step 50),
forming in said substrate (54) a face forming an acute angle with said film bearing surface and filling in space adjacent to said face with a non-magnetic material (58),
laying down a probe film (56) of a highly magnetically permeable and high saturation density material forming a pole on said film bearing surface of said substrate of magnetic material (step 52),
forming a U-shaped member (64) comprising first (68) and second (70) leg members and a base member (66) (step 60), said second leg member (70) including a step portion (74) defining a desired finished gap length between said U-shaped member (64) and said probe film (56), and an unstepped portion (76) so that only the portion of said second leg member including said step portion (74) is of the same length as said first leg member (step 62),
fastening said legs of said second member (64) including said step portion of said second leg to said probe film layed down on said substrate of magnetic material to define an integral magnetic member, said magnetic member defining a gap between said probe film (56) and said unstepped portion (76) of said second leg member (step 78),
lapping said magnetic member to cut off a region of said substrate of magnetic material (54), said probe film , and said second leg member including said step portion, thereby forming a magnetic member having said defined gap between said probe film and said second leg member, the pole tip (24) having a flat surface substantially flush with said lapped region (86) of said substrate of magnetic material, and
cutting said magnetic member into a plurality of magnetic heads having said defined gap between said probe film (56) and said second leg member (step 82),
wherein when said magnetic heads are used in a system to read or write data to a recording medium, said flat surface of said pole tip (24) is parallel to said recording medium.

7. A method as in Claim 6 further including the step of filing said gap between said probe film (56) and said second leg (70) with glass to fix the spaced-apart distance between said pole tip and said second leg.

8. A method as in Claim 7 wherein said lapping step includes the step of cutting off a portion of said acute angle face region of said substrate of magnetic material (54) to form said flat surface (86) of said substrate and said flat surface of said pole tip (24) parallel to the surface of said recording medium in said system.

## Patentansprüche

1. Lese/Schreib-Kopf zur Verwendung beim Aufzeichnen und Lesen von Daten auf einem senkrechten Aufzeichnungsmedium (12) mit einem ersten länglichen Magnetelement (20, 26) und einem zweiten U-förmigen Element (32, 34, 36), das eine Basis (32) und zwei Schenkel (34, 36) aufweist, wobei sich die Basis parallel zu dem länglichen Element erstreckt und die Schenkel von der Basis gehalten werden und mit dieser einen Teil bilden und sich in Richtung einer ersten Fläche des länglichen Elements erstrecken, wobei ein Schenkel (34) länger ist als der andere (36) und wobei das erste und das zweite Element mit einem offenen Spaltabschnitt (38) aneinander befestigt sind, der zwischen dem kürzeren Schenkel (36) des zweiten U-förmigen Elements und dem ersten länglichen Magnetelement gebildet wird, wobei der Spaltabschnitt derart gebildet ist, daß er während der Verwendung des Lese/Schreib-Kopfes in unmittelbarer Nähe des Aufzeichnungsmediums ist, wobei das erste längliche Element ein Magnetelement (26) mit einer länglichen, dünnen Filmschicht (20) eines Magnetmaterials von hoher Permeabilität aufweist, die von der ersten Fläche des ersten Elements getragen wird und sich in Längsrichtung dieser Fläche erstreckt und etwa auf gleicher Höhe mit dem ersten Element in unmittelbarer Nähe des Aufzeichnungsmediums in einer Polspitze (22) abschließt, deren Ende (24) eine Breite und Dicke aufweist, die der Auflösung des Kopfes dienen, wenn der Kopf für den Zugriff auf Informationen verwendet wird; dadurch gekennzeichnet, daß das erste längliche Magnetelement (26) in einem Bereich mit einem verengten Ende abschließt, das sich zum Teil in Richtung der Polspitze (22) neigt, wobei das verengte Ende (87) des ersten länglichen Magnetelements (20, 26), wenn es von einem Schreibstrom gespeist wird, magnetisch gesättigt wird, wodurch das Ende der Polspitze (24) zur einzigen wirksamen Aufzeichnungsoberfläche des Kopfes wird.

2. Lese/Schreib-Kopf nach Anspruch 1, dadurch gekennzeichnet, daß die Polspitze (24) eine ebene Oberfläche parallel zur Oberfläche des senkrechten Aufzeichnungsmediums (12) aufweist.

3. Lese/Schreib-Kopf nach Anspruch 2, dadurch gekennzeichnet, daß das längliche Magnetelement (26) einen unteren, dem senkrechten Aufzeichnungsmedium zugewandten Bereich einschließt, wobei der untere Bereich in einer Fläche abschließt, die von der Oberfläche des senkrechten Aufzeichnungsmediums (12) schräg in Aufwärtsrichtung angeordnet ist.

4. Lese/Schreib-Kopf nach Anspruch 1 oder 2, dadurch gekennzeichnet, daß das U-förmige Element (32, 34, 36) Magnetmaterial enthält, wobei ein magnetischer Kreis zum Zugriff auf Daten auf dem Medium über das U-förmige Magnetelement, das längliche Element (20, 26), das Polspitzenende (22) und das Magnetaufzeichnungsmedium (12) geschlossen ist.

5. Lese/Schreib-Kopf nach Anspruch 4, dadurch gekennzeichnet, daß eine Ecke des durch die schräg in Aufwärtsrichtung angeordnete Oberfläche gebildeten Kopfes mit einem nichtmagnetischen Material (58) gefüllt ist, so daß das Ende (22) des länglichen Elements (20) in unmittelbarer Nähe der Aufzeichnungsoberfläche mechanisch geschützt wird, und um eine Leere in luftlagernden Oberflächen zu verhindern, wenn der Kopf in einem Lese/Schreib-System verwendet wird.

6. Verfahren zur Herstellung eines Lese/Schreib-Kopfes nach einem der Ansprüche 1 bis 5 zur Verwendung bei der Aufzeichnung und dem Lesen von Daten auf einem senkrechten Aufzeichnungsmedium mit den folgenden Schritten:
Bilden eines Substrats (54) aus Magnetmaterial mit einer filmtragenden Oberfläche (Schritt 50),
Bilden einer Fläche in dem Substrat (54), die einen spitzen Winkel mit der filmtragenden Schicht bildet, und Füllen des neben der Fläche liegenden Raumes mit einem nichtmagnetischen Material (58),
Auflegen eines Prüffilms (56) aus einem Material von hoher magnetischer Permeabilität und hoher Sättigungsdichte und Bilden eines Pols auf der filmtragenden Oberfläche aus dem Substrat aus Magnetmaterial (Schritt 52),
Bilden eines U-förmigen Elements (64) mit einem ersten (68) und einem zweiten Schenkelelement (70) und einem Basiselement (66) (Schritt 60), wobei das zweite Schenkelelement (70) einen Stufenabschnitt (74) aufweist und eine erwünschte Fertig-Spaltbreite zwischen dem U-förmigen Element (64) und dem Prüffilm (56) bildet, sowie einen ungestuften Abschnitt (76), so daß nur der Abschnitt des zweiten Schenkelelements mit dem Stufenabschnitt (74) von gleicher Länge ist wie das erste Schenkelelement (Schritt 62),
Befestigen der Schenkel des zweiten Elements (64) mit dem Stufenabschnitt des zweiten Schenkels an den auf das Substrat aus Magnetmaterial zur Bildung eines integralen Magnetelements aufgelegten Prüffilm, wobei das Magnetelement einen Spalt zwischen dem Prüffilm (56) und dem ungestuften Abschnitt (76) des zweiten Schenkelelements bildet (Schritt 78),
Läppen des Magnetelements, um den Bereich des Substrats des Magnetmaterials (54), des Prüffilms und des zweiten Schenkelelements mit dem Stufenabschnitt abzuschneiden, wodurch ein Magnetelement mit dem zwischen dem Prüffilm und dem zweiten Schenkelelement gebildeten Spalt gebildet wird, wobei die Polspitze (24) eine ebene Oberfläche auf etwa gleicher Höhe mit dem geläppten Bereich (86) des Substrats aus Magnetmaterial aufweist, und
Zerschneiden des Magnetelements in mehrere Magnetköpfe mit einem zwischen dem Prüffilm (56) und dem zweiten Schenkelelement gebildeten Spalt (Schritt 82),
wobei die ebene Oberfläche der Polspitze (24), wenn die Magnetköpfe in einem System zum Lesen oder Schreiben von Daten auf einem Aufzeichnungsmedium verwendet werden, parallel zum Aufzeichnungsmedium ist.

7. Verfahren nach Anspruch 6 mit dem weiteren Schritt: Füllen des Spalts zwischen dem Prüffilm (56) und dem zweiten Schenkel (70) mit Glas, um den Zwischenabstand zwischen der Polspitze und dem zweiten Schenkel zu befestigen.

8. Verfahren nach Anspruch 7, wobei der Schritt des Läppens den Schritt des Abschneidens eines Abschnitts des spitzwinkligen Flächenbereichs des Substrats aus Magnetmaterial (54) umfaßt zur Bildung der ebenen Oberfläche (86) des Substrats und der ebenen Oberfläche der Polspitze (24) parallel zu der Oberfläche des Aufzeichnungsmediums in dem System.

## Revendications

1. Tête de lecture/écriture à utiliser dans l'enregistrement et la lecture de données sur des supports (12) d'enregistrement perpendiculaire, comportant un premier élément magnétique allongé (20, 26) et un second élément (32, 34, 36) de forme en U ayant une base (32) et deux branches (34, 36), ladite base s'étendant parallèlement audit élément allongé et lesdites branches étant supportées par ladite base avec laquelle elles sont réalisées d'une seule pièce et s'étendant vers une première face dudit élément allongé, l'une (34) desdites branches étant plus longue que l'autre branche (36), et lesdits premier et second éléments étant assujettis l'un à l'autre de façon qu'une partie à intervalle ouvert (38) soit définie entre la branche courte (36) dudit second élément de forme en U et ledit premier élément magnétique allongé, ladite partie à intervalle étant destinée à être proche dudit support d'enregistrement pendant l'utilisation de la tête de lecture/écriture, ledit premier élément allongé comprenant un élément magnétique (26) ayant une couche allongée (20) en film mince en matière à haute perméabilité magnétique portée sur et s'étendant longitudinalement sur ladite première face dudit premier élément et se terminant sensiblement au niveau dudit premier élément à proximité dudit support d'enregistrement dans un bout polaire (22) dont l'extrémité (24) a une largeur et une épaisseur agissant de façon à établir la résolution de la tête lorsque ladite tête est utilisée pour accéder à une information ; caractérisée en ce que ledit premier élément magnétique allongé (26) aboutit dans une région ayant une extrémité étroite inclinée en partie vers ledit bout polaire (22), grâce à quoi, lorsqu'elle est attaquée par un courant d'écriture, ladit extrémité rétrécie (87) dudit premier élément magnétique allongé (20, 26) se sature magnétiquement, laissant ladite extrémité (24) du bout polaire en tant que seule surface d'enregistrement efficace de ladite tête.

2. Tête de lecture/écriture selon la revendication 1, caractérisée en ce que ladite extrémité (24) du bout polaire présente une surface plate parallèle à la surface desdits supports (12) d'enregistrement perpendiculaire.

3. Tête de lecture/écriture selon la revendication 2, caractérisée en ce que ledit élément magnétique allongé (26) comprend une région inférieure faisant face audit support d'enregistrement perpendiculaire, ladite région inférieure se terminant par une face inclinée vers le haut et à l'écart de ladite surface dudit support (12) d'enregistrement perpendiculaire.

4. Tête de lecture/écriture selon l'une des revendications 1 et 2, caractérisée en ce que ledit élément (32, 34, 36) de forme en U comprend une matière magnétique, un circuit magnétique pour l'accès à des données sur lesdits supports étant complété par ledit élément magnétique de forme en U, ledit élément allongé (20, 26), ladite extrémité (22) du bout polaire et ledit support d'enregistrement magnétique (12).

5. Tête de lecture/écriture selon la revendication 4, caractérisée en ce qu'un angle de ladite tête défini par ladite surface inclinée vers le haut est rempli d'une matière non magnétique (58), de manière que l'extrémité (22) dudit élément allongé (20) proche de la surface d'enregistrement soit protégée mécaniquement et de manière à éviter une lacune dans lesdites surfaces d'appui pneumatique lorsque ladite tête est utilisée dans un système de lecture/écriture.

6. Procédé pour fabriquer une tête de lecture/ écriture selon l'une quelconque des revendications 1 à 5, à utiliser dans l'enregistrement et la lecture de données sur un support d'enregistrement perpendiculaire, comprenant les étapes qui consistent :
à former un substrat (54) en matière magnétique présentant une surface de support de film (étape 50),
à former dans ledit substrat (54) une face formant un angle aigu avec ladite surface de support de film et à remplir un espace adjacent à ladite face avec une matière non magnétique (58),
à déposer un film (56) de sonde en matière à haute perméabilité magnétique et haute densité de saturation, formant un pôle, sur ladite surface de support de film dudit substrat en matière magnétique (étape 52),
à former un élément (64) de forme en U comprenant des premier (68) et second (70) éléments de branches et un élément de base (66) (étape 60), ledit second élément de branche (70) comprenant une partie épaulée (74) définissant une longueur d'intervalle fini souhaitée entre ledit élément (64) de forme en U et ledit film (56) de sonde, et une partie non épaulée (76) de manière que seule la partie dudit second élément de branche comprenant ladite partie épaulée (74) soit de la même longueur que ledit premier élément de branche (étape 62),
à fixer lesdites branches dudit second élément (64), comprenant ladite partie épaulée de ladite seconde branche, audit film de sonde déposé sur ledit substrat en matière magnétique pour définir un élément magnétique intégré, ledit élément magnétique définissant un intervalle entre ledit film (56) de sonde et ladite partie non épaulée (76) dudit second élément de branche (étape 78),
à rectifier ledit élément magnétique pour sectionner une région dudit substrat en matière magnétique (54), dudit film de sonde et dudit second élément de branche comprenant ladite partie épaulée, formant ainsi un élément magnétique ayant ledit intervalle défini entre ledit film de sonde et ledit second élément de branche, le bout polaire (24) ayant une surface plate sensiblement de niveau avec ladite région rectifiée (86) dudit substrat en matière magnétique, et
à découper ledit élément magnétique en plusieurs têtes magnétiques ayant ledit intervalle défini entre ledit film (56) de sonde et ledit second élément de branche (étape 82),
dans lequel lorsque lesdites têtes magnétiques sont utilisées dans un système pour lire ou écrire des données sur un support d'enregistrement, ladite surface plate dudit bout polaire (24) est parallèle audit support d'enregistrement.

7. Procédé selon la revendication 6, comprenant en outre l'étape qui consiste à remplir ledit intervalle entre ledit film (56) de sonde et ladite seconde branche (70) avec du verre pour fixer la distance d'écartement entre ledit bout polaire et ladite seconde branche.

8. Procédé selon la revendication 7, dans lequel ladite étape de rectification comprend l'étape qui consiste à sectionner une partie de ladite région de face à angle aigu dudit substrat en matière magnétique (54) pour former ladite surface plate (86) dudit substrat et ladite surface plate dudit bout polaire (24) parallèlement à la surface dudit support d'enregistrement dans ledit système.
